# EUROPEAN PATENT APPLICATION

(11) **EP 4 598 129 A1**
(43) Date of publication of application: **06.08.2025**
(21) Application number: 23872305.0
(22) Date of filing: 26.09.2023
(51) Int. Cl.: H04W 36/24, H04W 36/18, H04W 76/38

(54) **COMMUNICATION DEVICE, BASE STATION, AND COMMUNICATION METHOD**

(30) Priority: 30.09.2022 JP 2022159053
(71) Applicant: DENSO CORPORATION, Kariya-city, Aichi 448-8661 (JP)
(72) Inventor: MAEMOTO, Daiki, Kariya- city, Aichi 4488661 (JP)
(74) Representative: TBK
(86) International application number: PCT/JP2023/034835
(87) International publication number: WO 2024/071082

(57) **Abstract**

A communication apparatus (100) configured to communicate with a master cell group associated with a master node and a secondary cell group associated with a secondary node, the communication apparatus comprising: a receiver (112) configured to receive a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and a controller (120) configured to determine whether to release the CPC configuration based on the determination information.

## Description

### Cross-Reference to Related Application

This application is based on and claims the benefit of priority from Japanese Patent Application No. 2022-159053, filed on September 30, 2022, the entire contents of which are incorporated herein by reference.

### Technical Field

The present disclosure relates to a communication apparatus, a base station, and a communication method used in a mobile communication system.

### Background Art

In a mobile communication system conforming to the technical specification of the 3rd Generation Partnership Project (hereinafter, 3GPP (registered trademark)) which is a mobile communication system standardization project, dual connectivity (DC) is introduced. In the DC, a user equipment performs communication with a master cell group (MCG) associated with a master node (also referred to as a "master base station") and a secondary cell group (SCG) associated with a secondary node (also referred to as a "secondary base station").

The 3GPP technical specification defines primary secondary cell (PS cell) change. As one procedure of changing the PS cell, there is a conditional PS cell change (CPC) procedure. In the CPC procedure, the communication apparatus performs the PS cell change when an execution condition based on the configured CPC configuration is fulfilled. For example, the secondary node can be switched from the source secondary node (first secondary node) to the target secondary node (second secondary node) without an instruction from the master node. In the current technical specification, the communication apparatus releases all CPC configurations stored in the communication apparatus when the CPC procedure is successfully performed.

In recent years, for example, continuous cell change has been discussed so that a cell can be continuously changed when a communication apparatus moves at a high speed. In order to achieve continuous cell change, it has been proposed that a network explicitly releases a CPC configuration configured to a communication apparatus under a premise that the CPC configuration is not released even if a CPC procedure succeeds (see Non Patent Literature 1). This can avoid reconfiguring the CPC configuration on the communication apparatus and allow the communication apparatus to perform the CPC procedure based on the CPC configuration stored, even after successfully performing the CPC procedure.

### Citation List

### Non Patent Literature

Non Patent Literature 1: 3GPP Contribution "R2-2208036 (Analysis of applicable scenarios and problems for NR-DC selective activation procedure)"

### Summary of Invention

A communication apparatus according to a first aspect configured to communicate with a master cell group associated with a master node and a secondary cell group associated with a secondary node, the communication apparatus comprising: a receiver configured to receive a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and controller (120) configured to determine whether to release the CPC configuration based on the determination information.

A base station according to a second aspect configured to operate as a master node in a first network including a master node associated with a master cell group (MCG) configured for a communication apparatus and a secondary node associated with a secondary cell group (SCG) configured for the communication apparatus, the base station comprising: a transmitter configured to transmit, to the communication apparatus, a radio resource control (RRC) message including a conditional PS cell change (CPC) configuration, which is a configuration to change a primary secondary cell (PS cell) that is a primary cell of the secondary cell group when an execution condition is fulfilled, and determination information for the communication apparatus to determine whether to release the CPC configuration.

A communication method according to a third aspect executed at a communication apparatus configured to communicate with a master cell group associated with a master node and a secondary cell group associated with a secondary node, the communication method comprising the steps of: receiving a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and determining whether to release the CPC configuration based on the determination information.

A communication method according to a second aspect executed at a base station configured to operate as a master node in a first network including a master node associated with a master cell group (MCG) configured for a communication apparatus

(100) and a secondary node associated with a secondary cell group (SCG) configured for the communication apparatus, the communication method comprising a step of transmitting, to the communication apparatus, a radio resource control (RRC) message including a conditional PS cell change (CPC) configuration, which is a configuration to change a primary secondary cell (PS cell) that is a primary cell of the secondary cell group when an execution condition is fulfilled, and determination information for the communication apparatus to determine whether to release the CPC configuration.

### Effect of the invention

According to an aspect of the present invention, it is able to provide a communication apparatus, a base station, and a communication method capable of appropriately releasing the CPC configuration.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack in a mobile communication system according to the embodiment.
Fig. 3 is a diagram illustrating an overview of a dual connectivity (DC) according to the embodiment.
Fig. 4 is a diagram illustrating a configuration example of a user equipment (UE) according to the embodiment.
Fig. 5 is a diagram illustrating a configuration of a base station according to the embodiment.
Fig. 6 is a diagram illustrating an operation example of the mobile communication system according to the embodiment.
Fig. 7 is a diagram illustrating a configuration example of an RRC Reconfiguration message according to the embodiment.
Fig. 8 is a diagram illustrating a configuration example of an RRC Reconfiguration message according to the embodiment.
Fig. 9 is a diagram illustrating an operation example of the UE according to the embodiment.
Fig. 10 is a diagram illustrating an operation example of the UE according to the embodiment.
Fig. 11 is a diagram illustrating an operation example of the UE according to the embodiment.
Fig. 12 is a diagram illustrating an operation example of the UE according to the embodiment.

### Description of Embodiments

A mobile communication system according to an embodiment will be described with reference to the drawings. In the description of the drawings, the same or similar parts are denoted by the same or similar reference numerals.

There is a concern that the CPC configuration cannot be properly released because the communication apparatus must continue to retain the CPC configuration until it receives a CPC configuration release instruction from the network.

Therefore, an object of the present invention is to provide a communication apparatus, a base station, and a communication method capable of appropriately releasing the CPC configuration.

### (Configuration of Mobile Communication System)

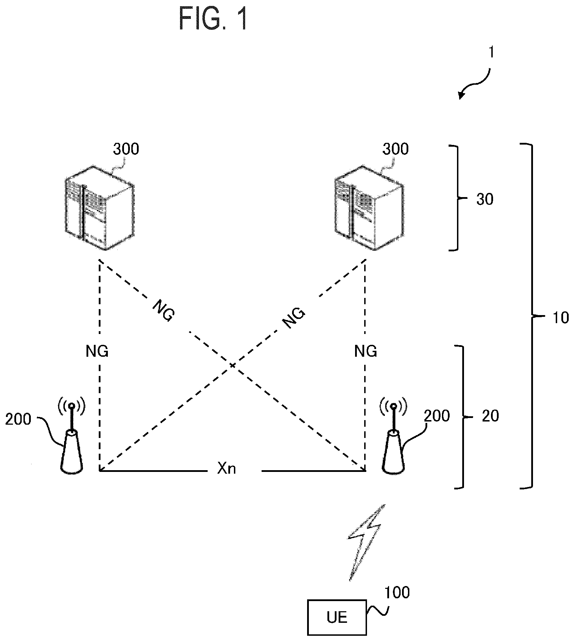

A configuration of a mobile communication system 1 according to an embodiment will be described with reference to Fig. 1. The mobile communication system 1 is, for example, a system conforming to the 3GPP technical specification (TS). Hereinafter, as the mobile communication system 1, a description will be given, as an example, as to the 5th generation system (5GS) of the 3GPP standard, that is, a mobile communication system based on new radio (NR).

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30.

The UE 100 is an example of a communication apparatus. The UE 100 may be an apparatus used by a user. The UE 100 may be a user equipment specified in the 3GPP technical specification. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. Note that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory device or the like.

The NG-RAN 20 includes a plurality of base stations 200. Each of the base stations 200 manages at least one cell. A cell forms a minimum unit of a communication area. For example, one cell belongs to one frequency (a carrier frequency) and is formed by one component carrier. The term "cell" may represent a radio communication resource, and may also represent a communication target of the UE 100. Each base station 200 can perform radio communication with the UE 100 existing in the cell of each base station 200. The base station 200 communicates with the UE 100 by using a protocol stack of a RAN. The base station 200 is connected to another base station 200 (which may also be referred to as a neighboring base station) via an Xn interface. The base station 200 communicates with the neighboring base station via the Xn interface. In addition, the base station 200 provides NR user plane and control plane protocol terminations towards the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for user plane processing. The AMF and the UPF are connected to the base station 200 via the NG interface.

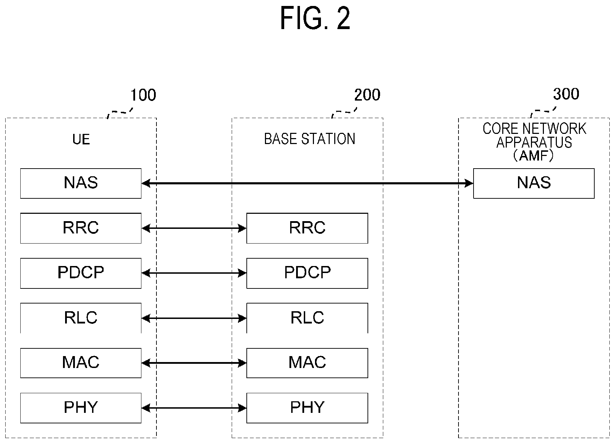

Next, a configuration example of a protocol stack in the mobile communication system 1 according to the embodiment will be described with reference to Fig. 2.

A protocol of a radio section between the UE 100 and the base station 200 includes a physical (PHY) layer, a MAC (Medium Access Control) layer, an RLC (Radio Link Control) layer, a PDCP (Packet Data Convergence Protocol) layer, and an RRC (Radio Resource Control) layer.

The PHY layer performs encoding/decoding, modulation/demodulation, antenna mapping/demapping, and resource mapping/demapping. Data and control information are transmitted, via a physical channel, between the PHY layer of the UE 100 and the PHY layer of the base station 200.

The physical channel includes a plurality of OFDM symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to the subcarrier spacing may be included in the subframe.

Among the physical channels, a physical downlink control channel (PDCCH) plays a central role for purposes such as, for example, downlink scheduling allocation, uplink scheduling grant, and transmission power control. For example, the UE 100 performs blind decoding of the PDCCH using a cell-radio network temporary identifier (C-RNTI) and a modulation and coding scheme-C-RNTI (MCS-C-RNTI) or a configured scheduling-RNTI (CS-RNTI) allocated from the base station 200 to the UE 100, and acquires a DCI which has been successfully decoded as a DCI addressed to its own UE. Here, a CRC parity bit scrambled by the C-RNTI and the MCS-C-RNTI or the CS-RNTI is added to the DCI transmitted from the base station 200.

In the NR, the UE 100 can use a bandwidth narrower than a system bandwidth (that is, the bandwidth of the cell). The base station 200 configures a bandwidth part (BWP) of consecutive PRBs in the UE 100. The UE 100 transmits and receives data and a control signal on an active BWP. In the UE 100, for example, a maximum of four BWPs can be configured. The BWPs may have different subcarrier spacings or may have frequencies overlapping each other. In a case in which a plurality of BWPs are configured for the UE 100, the base station 200 can designate which BWP is to be activated by control in downlink. As a result, the base station 200 can dynamically adjust the UE bandwidth according to the amount of data traffic of the UE 100 and the like, and can reduce the UE power consumption.

The base station 200 can, for example, configure a maximum of three control resource sets (CORESET) for each of a maximum of four BWPs on a serving cell. The CORESET is a radio resource for control information to be received by the UE 100. A maximum of 12 CORESETs may be configured on the serving cell in the UE 100. Each CORESET has indices 0 to 11. For example, the CORESET includes 6 resource blocks (PRB) and one, two, or 3 consecutive OFDM symbols in the time domain.

The MAC layer performs data priority control, retransmission processing by hybrid ARQ (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control, and a radio bearer that is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

A NAS layer located above the RRC layer performs session management and mobility management of the UE 100. NAS signaling is transmitted between the NAS layer of the UE 100 and the NAS layer of the core network apparatus 300 (AMF). Note that the UE 100 has an application layer and the like in addition to a radio interface protocol.

### (Overview of DC)

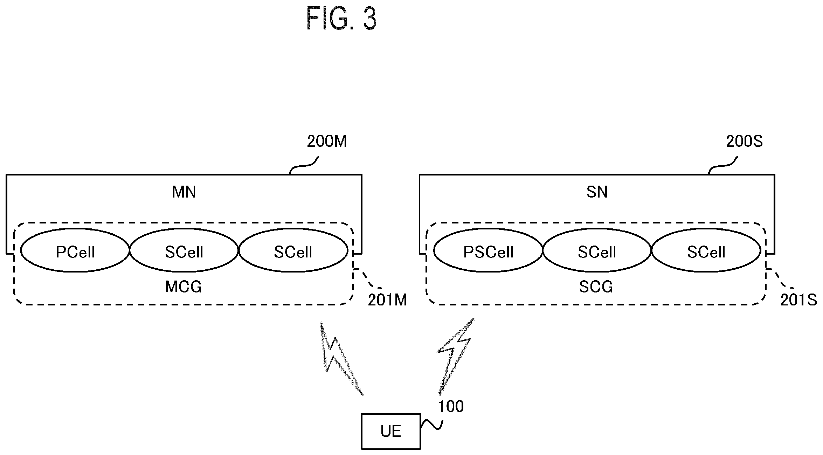

An overview of dual connectivity (DC) according to the embodiment will be described with reference to Fig. 3.

In the DC, the UE 100 performs simultaneous communication with a master cell group (MCG) 200M managed by a master node (MN) 201M and a secondary cell group (SCG) 200S managed by a secondary node (SN) 201S. The MN 200M may be an NR base station (gNB) or an LTE base station (eNB). The MN 200M is also referred to as a master base station. An SN 200S may be an NR base station (gNB) or an LTE base station (eNB). The SN 200S is also referred to as a secondary base station.

For example, the MN 200M transmits a designated message (for example, an SN addition request message) to the SN 200S, and the MN 200M transmits an RRC reconfiguration message to the UE 100, so that the DC is initiated.

The UE 100 in the RRC connected state is allocated radio resources from schedulers of the MN 200M and the SN 200S connected to each other via a network communicator of the backhaul, and performs radio communication by using the radio resources of the MN 200M and the radio resources of the SN 200S. The network communicator between the MN 200M and the SN 200 may be an Xn interface or an X2 interface. The MN 200M and the SN 200 communicate with each other via the network communicator.

The MN 200M may have a control plane connection with the core network. The MN 200M provides main radio resources of the UE 100. The MN 200M manages the MCG 201M. The MCG 201M is a group of serving cells associated with the MN 200M. The MCG 201M includes a primary cell (PCell), and optionally includes one or more secondary cells (SCells).

The SN 200S may not have a control plane connection with the core network. The SN 200S provides additional radio resources to the UE 100. The SN 200S manages the SCG 201S. The SCG is associated with the SN 200S. The SCG 201S includes a primary secondary cell (PS cell), and optionally includes one or more SCells. Note that the PCell of the MCG 201M and the PS cell of the SCG 201S are also referred to as special cells (SpCells).

In the DC, a PS cell change of the SCG 201S may be performed. By the PS cell change, a MAC entity may be reset, and an RLC entity for the SCG 201S may be reestablished. By the PS cell change, a change procedure of SN 200S may be performed. For example, a change procedure of changing the SN 200S from the source SN 200S1 (first secondary node) to the target SN 200S2 (second secondary node) is performed by the PS cell change.

The 3GPP technical specification defines primary secondary cell (PS cell) change. As one procedure of changing the PS cell, there is a conditional PS cell change (CPC) procedure. In the CPC procedure, the UE 100 performs the PS cell change when an execution condition based on the configured CPC configuration is fulfilled. For example, the secondary node can be switched from the source secondary node to the target secondary node without an instruction from the master node. In the current technical specification, the UE 100 releases all CPC configurations stored in the UE 100 when the CPC procedure is successfully performed.

In recent years, for example, continuous cell change has been discussed so that a cell can be continuously changed when the UE 100 moves at a high speed. In order to achieve continuous cell change, it has been proposed that a network explicitly releases a CPC configuration configured to the UE 100 under a premise that the CPC configuration is not released even if a CPC procedure succeeds. This can avoid reconfiguring the CPC configuration on the UE 100 and allow the UE 100 to perform the CPC procedure based on the CPC configuration stored, even after successfully performing the CPC procedure.

However, there is a concern that the CPC configuration cannot be properly released until the UE 100 receives a CPC configuration release instruction from the network. In an embodiment to be described below, an operation for enabling the CPC configuration to be appropriately released will be described.

### (Configuration of User Equipment)

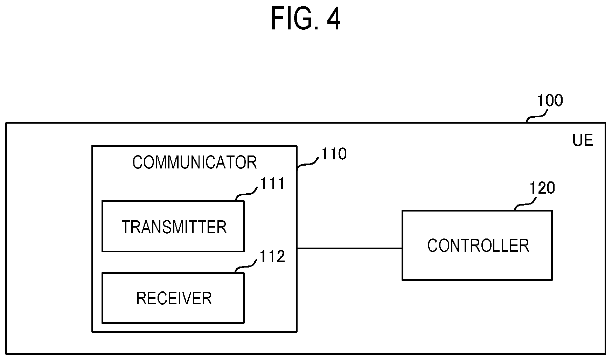

A configuration of the UE 100 according to the embodiment will be described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into a space. Further, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation under the control of the controller 120. The controller 120 may include at least one processor capable of executing a program and a memory that stores the program. The processor may execute the program to perform the operation of the controller 120. The controller 120 may include a digital signal processor that performs digital processing of a signal transmitted and received via the antenna and the RF circuit. The digital processing includes processing of the protocol stack of the RAN. Note that the memory stores a program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. The whole or part of the memory may be included in the processor.

In the UE 100 configured in this manner, the receiver 112 receives a radio resource control (RRC) message including a conditional PS cell change (CPC) configuration, which is a configuration to change a primary secondary cell (PS cell), which is a primary cell of a secondary cell group, when an execution condition is fulfilled, and determination information for the UE 100 to determine whether to release the CPC configuration. The controller 120 determines whether to release the CPC configuration based on the determination information. As a result, the UE 100 can appropriately discard the CPC configuration based on the determination information.

### (Configuration of Base Station)

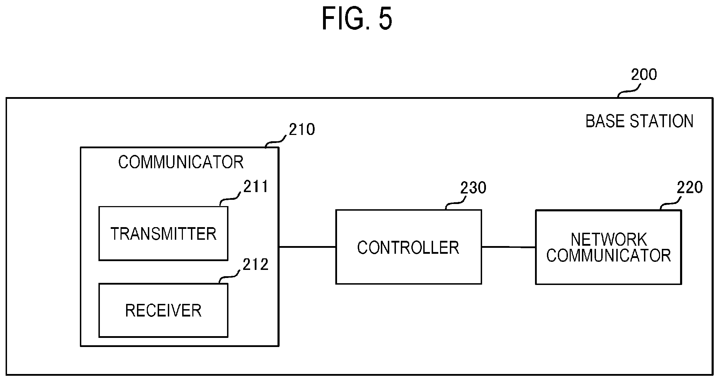

A configuration of the base station 200 according to the embodiment will be described with reference to Fig. 5. The base station 200 includes a communicator 210, a network communicator 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from the network. The network communicator 220 receives a signal from a neighboring base station connected via the Xn interface which is an interface between base stations, for example, and transmits a signal to the neighboring base station. Further, the network communicator 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Further, the controller 230 controls, for example, communication with a node (for example, the neighboring base station or the core network apparatus 300) via the network communicator 220. The operation of the base station 200 described above and described below may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via the antenna and the RF circuit. The digital processing includes processing of the protocol stack of the RAN. Note that the memory stores a program to be executed by the processor, parameters related to the program, and data related to the program. The whole or part of the memory may be included in the processor.

In the base station 200 configured in this manner, the transmitter 211 transmits, to the UE 100, a radio resource control (RRC) message including a conditional PS cell change (CPC) configuration, which is a configuration to change a primary secondary cell (PS cell), which is a primary cell of a secondary cell group, when an execution condition is fulfilled, and determination information for the UE 100 to determine whether to release the CPC configuration. As a result, the UE 100 can appropriately discard the CPC configuration based on the determination information.

### (Operation Example of Mobile Communication System)

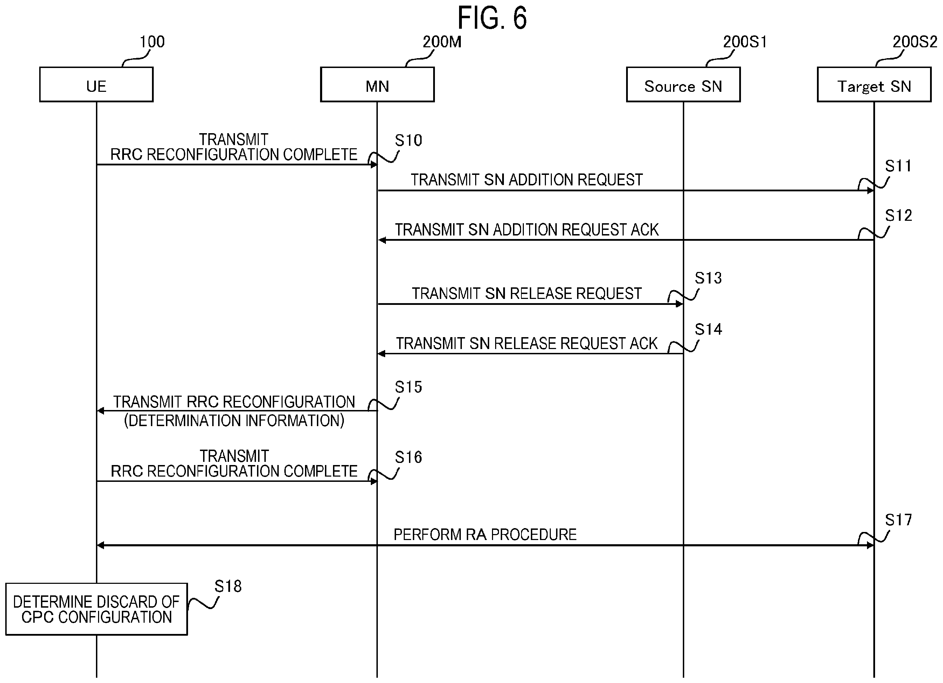

An operation example of the mobile communication system 1 according to the embodiment will be described with reference to Fig. 6. It is assumed that DC by the UE 100, the MN 200M, and the source SN 200S1 is configured before the process illustrated in Fig. 6 is initiated.

In step S10, the controller 120 of the UE 100 generates a measurement report including a measurement result for each cell, and transmits the measurement report from the transmitter 211 to the MN 200M. For example, the UE 100 transmits the measurement report in response to fulfilling a condition that the received signal strength from the cell of the source SN 200S1 becomes lower than a threshold and the received signal strength from the cell of the target SN 200S2 becomes higher than the threshold.

In step S11, the controller 230 of the MN 200M generates an SN addition request message in response to the reception of the measurement report by the receiver 212, and transmits the SN addition request message from the network communicator 220 to the target SN 200S2.

In step S12, the controller 230 of the target SN 200S2 generates an SN addition request ACK message in response to the reception of the SN addition request message by the network communicator 220, and transmits the SN addition request ACK message from the network communicator 220 to the MN 200M.

In step S13, the controller 230 of the MN 200M generates an SN addition request message in response to the reception of the N addition request ACK by the network communicator 220, and transmits the SN release request message from the network communicator 220 to the source SN 200S1.

In step S14, the controller 230 of the source SN 200S1 generates an SN release request ACK message in response to the reception of the SN release request message by the network communicator 220, and transmits the SN release request ACK message from the network communicator 220 to the MN 200M.

In step S15, the controller 230 of the MN 200M generates an RRC reconfiguration message to be used for the conditional PS cell change in response to the reception of the SN release request ACK message by the network communicator 220, and transmits the RRC reconfiguration message from the transmitter 211 to the UE 100.

The RRC reconfiguration message includes a conditional PS cell change (CPC) configuration, which is a configuration to change the PS cell when an execution condition is fulfilled, and determination information for the UE 100 to determine whether to release the CPC configuration.

The CPC configuration (for example, conditionalReconfiguration) may be a conditional handover (CHO), a conditional PS cell addition (CPA), or a configuration of candidate target Sp cells and execution conditions for a CPC.

The determination information may be information for configuring the UE 100 to determine whether the CPC configuration is released. The determination information may include at least one of an indicator indicating whether to release the CPC configuration after changing the PS cell, count information indicating the number of times the UE 100 stores the CPC configuration, timer information indicating a duration during which the UE 100 stores the CPC configuration, and event information indicating a condition for releasing the CPC configuration.

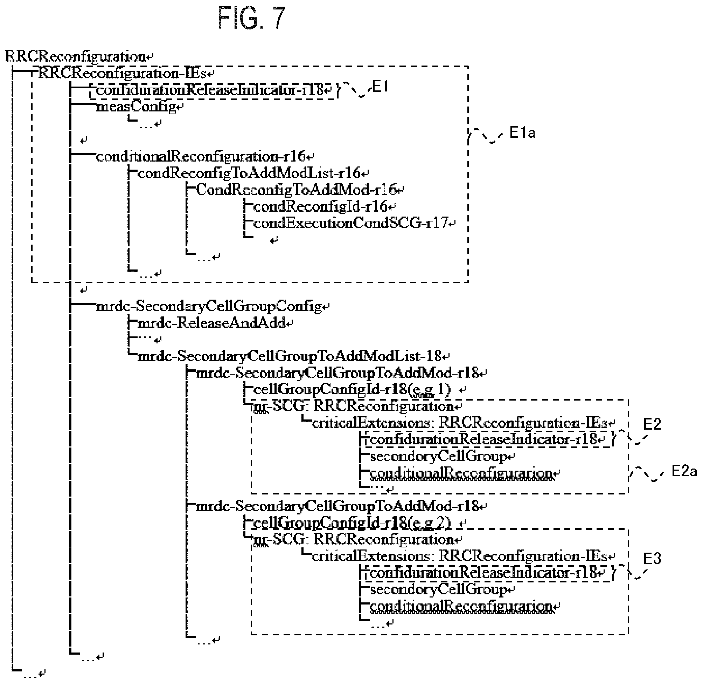

As illustrated in Fig. 7, the determination information may be associated with each CPC configuration included in the RRC reconfiguration message, for example. Depending on the location where the determination information is stored, CPC configurations released based on the determination information may be associated.

For example, when the determination information is associated with the configuration for a plurality of SCGs in the RRC reconfiguration message, the controller 120 may configure the determination information for each SCG. Therefore, for example, the controller 120 may adapt the determination result to all the execution conditions configured for each corresponding SCG.

For example, the determination information (for example, confidurationReleaseIndicator) indicated by E1 in Fig. 7 may be information indicated by E1a in Fig. 7. Similarly, the determination information (for example, confidurationReleaseIndicator) indicated by E2 in Fig. 7 may be information indicated by E2a in Fig. 7. The same applies to the determination information indicated by E3 in Fig. 7. Therefore, in Fig. 7, the controller 120 may determine whether to release the CPC configuration for the SCG associated with the determination information in the RRC reconfiguration message among the SCGs configured in the UE 100 based on the determination information.

For example, when the determination information is associated with the configuration for each SCG in the RRC reconfiguration message, the controller 120 may configure the determination information for each execution condition. Therefore, for example, the controller 120 may adapt the determination result to each corresponding execution condition.

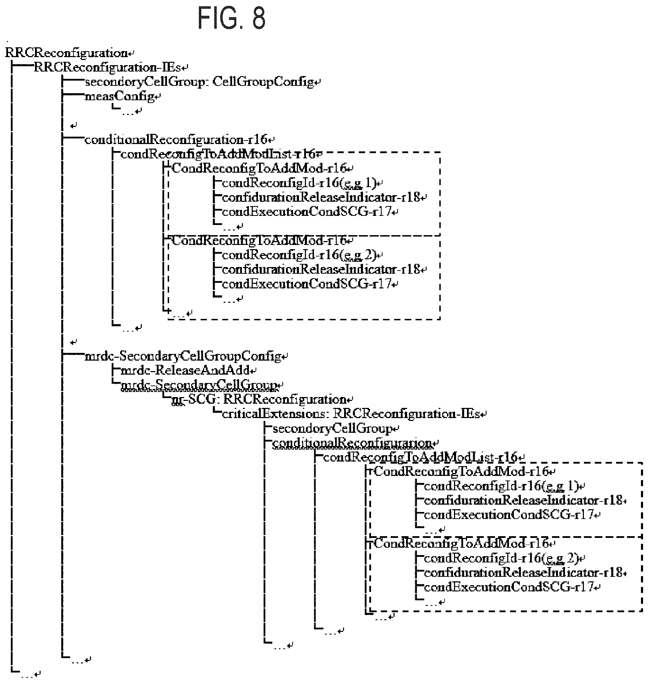

For example, as illustrated in Fig. 8, the controller 120 may determine whether to release the CPC configuration associated with the determination information among the CPC configuration configured in the UE 100 based on the determination information.

In addition, for example, when the determination condition is directly configured in the RRC reconfiguration message, the controller 120 may adapt the determination result to the execution conditions for all the cell groups configured in the RRC reconfiguration message. For example, in a case where the determination information is stored in the same layer as the RRC reconfiguration (RRCReconfiguration-IEs), the controller 120 may determine whether to release all the CPC configurations configured in the UE 100 based on the determination information.

In the determination information, a target to which the determination information is applied may be defined in advance regardless of the storage location.

In addition, the RRC reconfiguration message may include a list of SCG configurations (for example, mrdc-SecondaryCellGrouToAddModList) for configuring a plurality of SCG candidates including a PS cell candidate. Note that the SCG configuration is information for configuring a plurality of candidates of SCG (inter-SCG) associated with each target SN 200S2. As illustrated in Fig. 7, the list may include a set (mrdc-SecondaryCellGrouToAddMod) in which SCG configurations (for example, nr-SCG) and cell group configuration identifiers (for example, cellGroupConfigId) are associated with each other.

In step S16, the controller 120 of the UE 100 performs the RRC reconfiguration in response to the reception of an RRC reconfiguration message by the receiver 112, generates an RRC reconfiguration complete message, and transmits the RRC reconfiguration complete message from the transmitter 111 to the MN 200M.

After the RRC reconfiguration, the controller 120 of the UE 100 performs downlink synchronization (and downlink measurement) with respect to the target SN 200S2 (target PSCell) based on.

In step S17, the controller 120 of the UE 100 performs measurement on each candidate cell based on the CPC configuration, and performs random access to the target SN 200S2 (target PSCell) when the execution condition based on the CPC configuration is fulfilled. By performing such a random access procedure, the UE 100 performs the connection process on the target SN 200S2 (target PSCell), and the change of the PS cell is completed.

The controller 120 of the UE 100 may execute the processing of step S18 when the change of the PS cell is completed. In a case where the normal PS cell change and/or the conditional PS cell change is completed, the controller 120 may execute the processing of step S18.

In step S18, the controller 120 of the UE 100 determines whether to release the CPC configuration based on the determination information. The controller 120 may execute at least one of the following operations.

### (A) Indicator

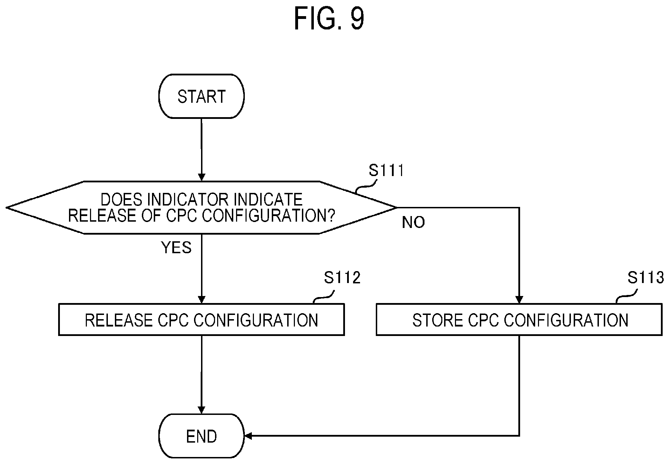

When the determination information includes an indicator, the controller 120 can determine whether to release the CPC configuration, as illustrated in Fig. 9. In step S111, when the indicator indicates the release of the CPC configuration, the controller 120 executes the processing of step S112. On the other hand, when the indicator does not indicate the release of the CPC configuration, the controller 120 executes the processing of step S113.

The indicator explicitly indicates whether to release the CPC configuration. The indicator may indicate to release the CPC configuration or to store the CPC configuration.

In step S112, the controller 120 releases the CPC configuration. In this case, the controller 120 may discard the CPC configuration. The controller 120 may release the CPC configuration after the PS cell change is successful. The controller 120 may release the CPC configuration associated with the indicator.

In step S113, the controller 120 stores the CPC configuration. In this case, the controller 120 may keep the CPC configuration or may store the CPC configuration. The controller 120 may store the CPC configuration associated with the indicator.

### (B) Count Information

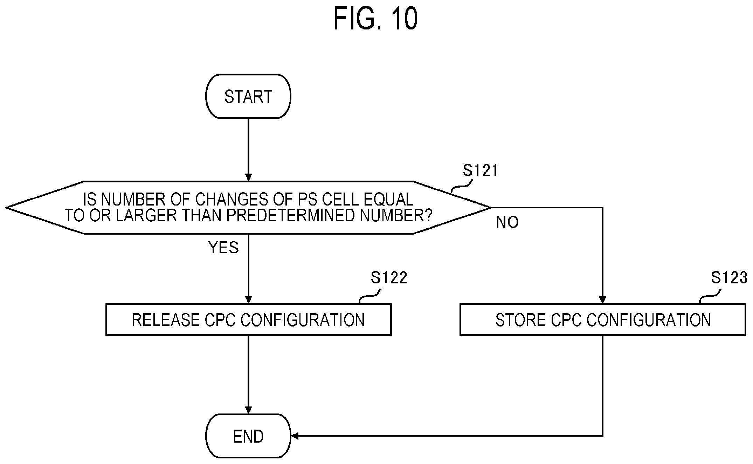

When the determination information includes count information, the controller 120 can determine whether to release the CPC configuration, as illustrated in Fig. 10. In step S121, the controller 120 can determine whether the number of changes of the PS cell is equal to or larger than a designated number of times indicated by the count information.

When the number of changes of the PS cell is equal to or larger than the number of times based on the count information, the controller 120 executes the processing of step S122. On the other hand, when the number of changes of the PS cell is less than the number of times based on the count information, the controller 120 executes the processing of step S123.

The controller 120 may execute the following processing in order to count the number of changes of the PS cell. The controller 120 configures a counter (for example, nonRelease_COUNTER) that counts the number of successes of the RA procedure in the PS cell change in the MAC layer. The controller 120 configures the initial value of the count to 0. The controller 120 increments the counter by 1 every time the RA procedure in the PS cell change succeeds. The controller 120 compares the counter with a designated number of times (for example, nonRelease_MaxCount) indicated by the count information. When the counter has reached equal to or larger than the designated number of times, the controller 120 executes the processing of step S122. Alternately, when the PS cell is changed after the counter has reached equal to or larger than the designated number of times, the controller 120 may execute the processing of step S122.

Note that the RRC reconfiguration message (or the determination information) may include information indicating a configuration value of the designated timer. The controller 120 may initiate the designated timer when the initial value of the counter is set to 0 in the MAC layer. When the designated timer expires, the controller 120 may reset the counter and execute the processing of step S122. When the designated timer expires, the controller 120 may execute the processing of step S122 regardless of the number of changes of the PS cell. When the PS cell is changed after the designated timer expires, the controller 120 may execute the processing of step S122.

Steps S122 and S123 are similar to steps S112 and S113.

### (C) Timer Information

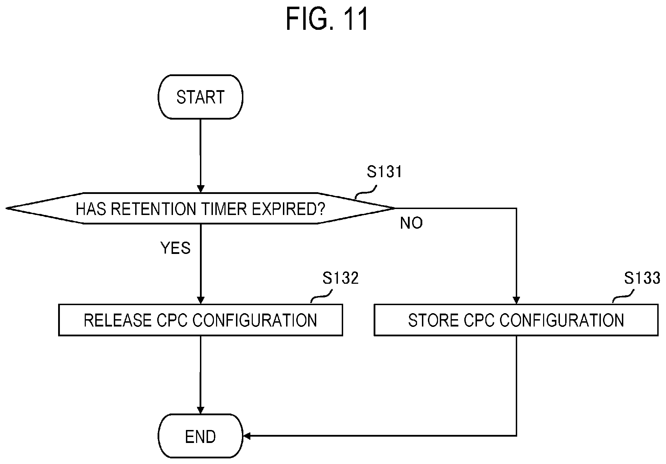

When the determination information includes timer information, the controller 120 can determine whether to release the CPC configuration, as illustrated in Fig. 11. In step S131, the controller 120 can determine whether the retention timer expires.

When the retention timer expires, the controller 120 executes the processing in step S132. On the other hand, when the retention timer does not expire, the controller 120 executes the processing in step S133.

For example, the controller 120 initiates the retention timer when executing the first measurement. The controller 120 stores the CPC configuration associated with the retention timer during operation when the change of the PS cell is performed during operation of the retention timer. The controller 120 may reinitiate the retention timer associated with the CPC configuration used to change the PS cell.

When the retention timer expires, the controller 120 may immediately execute the processing in step S132. When the PS cell is changed after the retention timer expires, the controller 120 may execute the processing of step S132.

### (D) Event Information

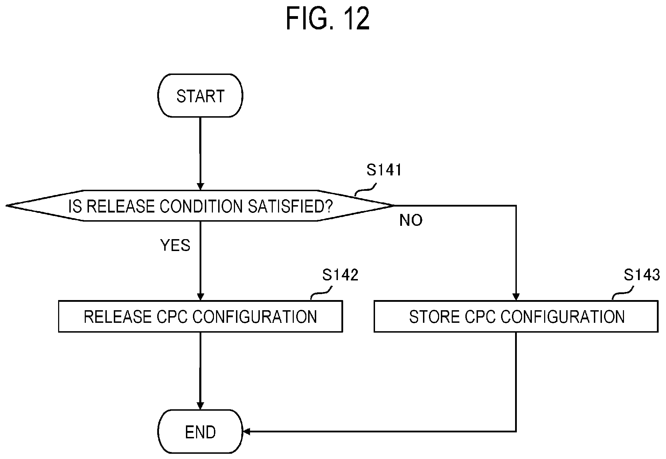

When the determination information includes event information, the controller 120 can determine whether to release the CPC configuration, as illustrated in Fig. 12. In step S141, the controller 120 can determine whether the release condition is fulfilled.

When the release condition is fulfilled, the controller 120 executes processing of step S142. On the other hand, when the release condition is not fulfilled, the controller 120 executes the processing of step S143.

In the event information, a new event (for example, CondEvent R1) may be set as an execution condition (release condition) as an event used in the measurement report. The event information may include, for example, a threshold (r1-threashold). The threshold may be configured by the MN 200M, the source SN 200S 1, or the target SN 200S2. The controller 120 may set a threshold and execute measurement while referring to the threshold.

For example, when the measurement result of the measurement object is equal to or more than (or larger than) the threshold, the controller 120 may store the CPC configuration (for example, a configuration associated with a measurement identifier (MeasID) configured for the same measurement object identifier (measObjectID)) configured for the measurement object (for example, the measObjectID configured in association with the CondEvent R1) until the next measurement timing.

For example, when the measurement result of the measurement object is less than (or equal to or less than) the threshold, the controller 120 executes the processing of step S 142 with regard to the CPC configuration (for example, a configuration associated with a measurement identifier (MeasID) configured for the same measurement object identifier (measObjectID)) configured for the measurement object (for example, the measurement object identifier (measObjectID) configured in association with the release condition (for example, CondEvent R1)). Alternately, when the PS cell is changed, the controller 120 may execute the processing of step S142 on the CPC configuration.

As described above, the transmitter 211 of the MN 200M receives the RRC message including the CPC configuration and the determination information. The receiver 112 of the UE 100 receives the RRC message including the CPC configuration and the determination information. The controller 120 determines whether to release the CPC configuration based on the determination information. As a result, the UE 100 can appropriately release the CPC configuration without receiving signaling for releasing the CPC configuration from the network 10.

In addition, the determination information may include an indicator indicating whether to release the CPC configuration after changing the PS cell. The controller 120 may release the CPC configuration when the indicator indicates release of the CPC configuration. As a result, since it is explicitly indicated whether to release the CPC configuration, the controller 120 can appropriately release the CPC configuration.

In addition, the controller 120 may store the CPC configuration without releasing the CPC configuration when the indicator indicates storing of the CPC configuration. As a result, the controller 120 can store the CPC configuration not instructed to be released from the network 10.

In addition, the determination information may include count information indicating the number of times the UE 100 stores the CPC configuration. The controller 120 may store the CPC configuration until the number of changes of the S cell becomes equal to or larger than the number of times based on the count information. As a result, the controller 120 can easily continuously change the cell based on the stored CPC configuration until the number of times becomes equal to or larger than the number of times based on the count information.

The controller 120 may release the CPC configuration when the PS cell is changed after the number of changes of the PS cell becomes equal to or larger than the number of times based on the count information. For example, when the UE 100 frequently changes the PS cell, the execution condition of the CPC configuration may not be appropriate. The UE 100 can release the CPC configuration.

In addition, when the designated timer expires, the controller 120 may release the CPC configuration regardless of the number of changes of the PS cell. The RRC message may include information indicating a setting value of the designated timer. As a result, it is possible to avoid the UE 100 from storing the CPC configuration for a long duration of time.

In addition, the determination information may include timer information indicating a duration during which the UE 100 stores the CPC configuration. The controller 120 may store the CPC configuration until the retention timer set based on the timer information expires. As a result, it is possible to avoid the UE 100 from storing the CPC configuration for a long duration of time.

In addition, the controller 120 may release the CPC configuration when the retention timer set based on the timer information expires. As a result, the UE 100 can avoid the UE 100 from storing the CPC configuration for a long duration of time.

In addition, the controller 120 may release the CPC configuration when the PS cell is changed after the retention timer set based on the timer information expires. As a result, the UE 100 can easily change the cell continuously even if the retention timer expires.

In addition, the determination information may include event information indicating the condition for releasing the CPC configuration. The controller 120 may store the CPC configuration until the condition is fulfilled. As a result, the UE 100 can easily change the cell continuously even if the condition is fulfilled.

In addition, the determination information may include event information indicating the condition for releasing the CPC configuration. The controller 120 may release the CPC configuration when the condition is fulfilled. As a result, the UE 100 can appropriately release the CPC configuration.

The controller 120 may release the CPC configuration when the PS cell is changed after the condition is fulfilled. The UE 100 can appropriately release the CPC configuration.

In addition, the controller 120 may determine whether to release all the CPC configuration configured in the UE 100 based on the determination information. As a result, the controller 120 can easily manage each CPC configuration.

Further, the controller 120 may determine whether to release the CPC configuration for the SCG associated with the determination information in the RRC message among the SCGs configured in the UE 100 based on the determination information. As a result, the UE 100 can flexibly determine whether to release the CPC configuration associated with the SCG.

Further, the controller 120 may determine whether to release the CPC configuration associated with the determination information in the RRC message among the CPC configurations configured in the UE 100 based on the determination information. As a result, the UE 100 can flexibly determine whether to release each CPC configuration.

The RRC message may include a list of SCG configurations for configuring a plurality of SCG candidates including a PS cell candidate. As a result, since a plurality of SCG candidates is configured in the UE 100, it is easy to continuously change the cell. In addition, the UE 100 can collectively manage information regarding a plurality of SCG candidates.

### [Other Embodiments]

In the above-described embodiment, the UE 100 determines whether to release the CPC configuration based on one piece of determination information, but the present invention is not limited thereto. The UE 100 may determine whether to release the CPC configuration based on a plurality of types of determination information.

For example, when the determination information includes first information configured by an indicator and second information different from the indicator (for example, at least one of the count information, the timer information, and the event information), the controller 120 may release the CPC configuration even if the indicator indicates the storing of the CPC configuration when determining to release the CPC configuration based on the second information. In addition, in a case where it is determined to release the CPC configuration in the second information in a state where the indicator indicates the storing of the CPC configuration, the corresponding indicator may be deleted.

In addition, the determination information may include first information configured by the count information and second information different from the count information (for example, at least one of an indicator, timer information, and event information). In a case where the controller 120 determines to release the CPC configuration based on the second information, the CPC configuration may be released even if the storing of the CPC configuration is indicated based on the count information. In addition, in a case where it is determined to release the CPC configuration in the second information in a state where the counter indicates the storing of the CPC configuration based on the count information, it may be determined that the corresponding counter is equal to or larger than a designated number of times.

In addition, the determination information may include first information configured by the timer information and second information different from the timer information (for example, at least one of an indicator, count information, and event information). In a case where the controller 120 determines to release the CPC configuration based on the second information, the CPC configuration may be released even if the timer information indicates the storing of the CPC configuration. In addition, in a case where it is determined to release the CPC configuration in the second information in a state where the retention timer indicates the storing of the CPC configuration, it may be considered that the corresponding retention timer expires.

In addition, the determination information may include first information configured by the event information and second information different from the count information (for example, at least one of an indicator, count information, and timer information). In a case where the controller 120 determines to release the CPC configuration based on the second information, the CPC configuration may be released even if the storing of the CPC configuration is indicated based on the event information. In addition, in a case where it is determined to release the CPC configuration in the second information in a state where the event information indicates the storing of the CPC configuration, it may be considered that the corresponding release condition is fulfilled.

In this manner, determination information to be preferentially applied among a plurality of types of determination information may be configured. By determining whether to release the CPC configuration based on a plurality of pieces of determination information, it is possible to flexibly configure the release of the CPC configuration.

In the above-described embodiment, the case where the RRC reconfiguration message includes the determination information has been described, but the determination information may be included in another RRC message.

The operation sequence (and the operation flow) in the above-described embodiment may not necessarily be executed in time series according to the order described in the flowchart or the sequence diagram. For example, the steps in the operation may be executed in an order different from the order described in the flowchart or the sequence diagram, or may be performed in parallel. In addition, some of the steps in the operation may be removed or additional steps may be added to the processing. In addition, the operation sequence (and the operation flow) in the above-described embodiment may be performed separately and independently, or may be performed by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not limited to this example. The mobile communication system 1 may be a system conforming to a TS of long term evolution (LTE) or another generation system (for example, the 6th generation) of the 3GPP standard. The base station 200 may be an eNB that provides E-UTRA user plane and control plane protocol terminations toward the UE 100 in LTE. The mobile communication system 1 may be a system conforming to a TS defined in a standard other than the 3GPP standard. The base station 200 may be an integrated access and backhaul (IAB) donor or an IAB node.

A program for causing a computer to perform each processing to be performed by the UE 100 or the base station 200 may be provided. The program may be recorded in a computer readable medium. By using the computer readable medium, the program can be installed in the computer. Here, the computer readable medium in which the program is recorded may be a non-transitory recording medium. The non-transitory recording medium is not particularly limited, and may be, for example, a recording medium such as a compact disk read only memory (CD-ROM) or a digital versatile disc read only memory (DVD-ROM). Furthermore, a circuit that performs each processing to be performed by the UE 100 or the base station 200 may be integrated, and at least a part of the UE 100 or the base station 200 may be configured as a semiconductor integrated circuit (a chipset or a system on chip (SoC)).

**In** the above-described embodiment, the term "transmit" may mean performing processing of at least one layer in a protocol stack used for transmission, or may mean physically transmitting a signal in a wireless or wired manner.
Alternatively, the term "transmit" may mean a combination of performing processing of at least one layer in a protocol stack used for transmission and physically transmitting a signal in a wireless or wired manner described above. Similarly, the term "receive" may mean performing processing of at least one layer in a protocol stack used for reception, or may mean physically receiving a signal in a wireless or wired manner. Alternatively, the term "receive" may mean a combination of performing processing of at least one layer in a protocol stack used for reception and physically receiving a signal in a wireless or wired manner described above. Similarly, the term "obtain/acquire" may mean obtaining/acquiring information from stored information, may mean obtaining/acquiring information from information received from another node, or may mean obtaining/acquiring information by generating the information. Similarly, the terms "based on" and "depending on/in response to" do not mean "only based on" or "only depending on/only in response to" unless explicitly stated otherwise. The term "based on" means both "only based on" and "at least partially based on". Similarly, the term "depending on/in response to" means both "only depending on/in response to" and "at least partially depending on/in response to". Similarly, the terms "include" and "comprise" do not mean including only enumerated items, but mean both including only enumerated items and including additional items in addition to the enumerated items. Similarly, in the present disclosure, the "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. References to first and second elements do not mean that only two elements can be employed therein or that the first element should precede the second element in any form. In the present disclosure, when articles such as a, an, and the in English are added by translation, these articles cover the plural meaning unless the context clearly indicates otherwise.

Although the present disclosure has been described in accordance with examples, it is understood that the present disclosure is not limited to the examples or structures. The present disclosure also covers various modified examples or modifications made within an equivalent range. In addition, various combinations or modes, or other combinations or modes including only one element, more elements, or less elements also fall within the scope and spirit of the present disclosure.

### (Supplementary Note)

Features related to the above-described embodiment are additionally described.

### (Supplementary Note 1)

A communication apparatus (100) configured to communicate with a master cell group associated with a master node and a secondary cell group associated with a secondary node, the communication apparatus comprising:
a receiver (112) configured to receive a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and
a controller (120) configured to determine whether to release the CPC configuration based on the determination information.

### (Supplementary Note 2)

The communication apparatus according to supplementary note 1, wherein
the determination information includes an indicator indicating whether to release the CPC configuration after changing the PS cell, and
the controller releases the CPC configuration when the indicator indicates release of the CPC configuration.

### (Supplementary Note 3)

The communication apparatus according to supplementary note 1 or 2, wherein
the determination information includes an indicator indicating whether to release the CPC configuration after changing the PS cell, and
the controller stores the CPC configuration without releasing the CPC configuration when the indicator indicates the storing of the CPC configuration.

### (Supplementary Note 4)

The communication apparatus according to claim 2 or 3, wherein
the determination information includes first information configured by the indicator and second information different from the indicator, and
when determining to release the CPC configuration based on the second information, the controller releases the CPC configuration even if the indicator indicates the storing of the CPC configuration.

### (Supplementary Note 5)

The communication apparatus according to any one of supplementary notes 1 to 4, wherein
the determination information includes count information indicating the number of times the communication apparatus stores the CPC configuration, and
the controller stores the CPC configuration until the number of changes of the PS cell becomes equal to or larger than the number of times based on the count information.

### (Supplementary Note 6)

The communication apparatus according to supplementary note 5, wherein
the controller releases the CPC configuration when the number of changes of the PS cell becomes equal to or larger than the number of times based on the count information.

### (Supplementary Note 7)

The communication apparatus according to supplementary note 5, wherein
the controller releases the CPC configuration when the PS cell is changed after the number of changes of the PS cell becomes equal to or larger than the number of times based on the count information.

### (Supplementary Note 8)

The communication apparatus according to any one of supplementary notes 5 to 7, wherein
the controller releases the CPC configuration regardless of the number of changes of the PS cell when a designated timer expires, and
the RRC message includes information indicating a setting value of the designated timer.

### (Supplementary Note 9)

The communication apparatus according to any one of supplementary notes 5 to 8, wherein
the determination information includes first information configured by the count information and second information different from the count information, and
when determining to release the CPC configuration based on the second information, the controller releases the CPC configuration even if the storing of the CPC configuration is indicated based on the count information.

### (Supplementary Note 10)

The communication apparatus according to any one of supplementary notes 1 to 9, wherein
the determination information includes timer information indicating the duration during which the communication apparatus stores the CPC configuration, and
the controller stores the CPC configuration until the retention timer set based on the timer information expires.

### (Supplementary Note 11)

The communication apparatus according to supplementary note 10, wherein
the controller releases the CPC configuration when a retention timer set based on the timer information expires.

### (Supplementary Note 12)

The communication apparatus according to claim 10 or 11, wherein
the controller releases the CPC configuration when the PS cell is changed after a retention timer set based on the timer information expires.

### (Supplementary Note 13)

The communication apparatus according to any one of supplementary notes 10 to 12, wherein
the determination information includes first information configured by the timer information and second information different from the timer information, and
when determining to release the CPC configuration based on the second information, the controller releases the CPC configuration even if the timer information indicates the storing of the CPC configuration.

### (Supplementary Note 14)

The communication apparatus according to any one of supplementary notes 1 to 13, wherein
the determination information includes event information indicating a condition for releasing the CPC configuration, and
the controller stores the CPC configuration until the condition is fulfilled.

### (Supplementary Note 15)

The communication apparatus according to any one of supplementary notes 1 to 14, wherein
the determination information includes event information indicating a condition for releasing the CPC configuration, and
the controller releases the CPC configuration when the condition is fulfilled.

### (Supplementary Note 16)

The communication apparatus according to supplementary note 15, wherein
the controller releases the CPC configuration when the PS cell is changed after the condition is fulfilled.

### (Supplementary Note 17)

The communication apparatus according to any one of supplementary notes 14 to 16, wherein
the determination information includes first information configured by the event information and second information different from the count information, and
when determining to release the CPC configuration based on the second information, the controller releases the CPC configuration even if the storing of the CPC configuration is indicated based on the event information.

### (Supplementary Note 18)

The communication apparatus according to any one of supplementary notes 1 to 17, wherein
the controller determines whether to release all the CPC configurations configured in the communication apparatus based on the determination information.

### (Supplementary Note 19)

The communication apparatus according to any one of supplementary notes 1 to 18, wherein
the controller determines whether to release the CPC configuration for the SCG associated with the determination information in the RRC message among the SCGs configured in the communication apparatus based on the determination information.

### (Supplementary Note 20)

The communication apparatus according to any one of supplementary notes 1 to 19, wherein
the controller determines whether to release the CPC configuration associated with the determination information in the RRC message among the CPC configurations configured in the communication apparatus based on the determination information.

### (Supplementary Note 21)

The communication apparatus according to any one of supplementary notes 1 to 20, wherein
the RRC message includes a list of SCG configurations for configuring a plurality of SCG candidates including the PS cell candidate.

### (Supplementary Note 22)

A base station (200M) configured to operate as a master node in a first network including a master node associated with a master cell group (MCG) configured for a communication apparatus (100) and a secondary node associated with a secondary cell group (SCG) configured for the communication apparatus, the base station comprising:
a transmitter (211) configured to transmit, to the communication apparatus, a radio resource control (RRC) message including a conditional PS cell change (CPC) configuration, which is a configuration to change a primary secondary cell (PS cell) that is a primary cell of the secondary cell group when an execution condition is fulfilled, and determination information for the communication apparatus to determine whether to release the CPC configuration.

### (Supplementary Note 23)

A communication method executed at a communication apparatus (100) configured to communicate with a master cell group associated with a master node and a secondary cell group associated with a secondary node, the communication method comprising the steps of:
receiving a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and
determining whether to release the CPC configuration based on the determination information.

### (Supplementary Note 24)

A communication method executed at a base station (200M) configured to operate as a master node in a first network including a master node associated with a master cell group (MCG) configured for a communication apparatus (100) and a secondary node associated with a secondary cell group (SCG) configured for the communication apparatus, the communication method comprising:
a step of transmitting, to the communication apparatus, a radio resource control (RRC) message including a conditional PS cell change (CPC) configuration, which is a configuration to change a primary secondary cell (PS cell) that is a primary cell of the secondary cell group when an execution condition is fulfilled, and determination information for the communication apparatus to determine whether to release the CPC configuration.

## Claims

1. A communication apparatus (100) configured to communicate with a master cell group associated with a master node and a secondary cell group associated with a secondary node, the communication apparatus comprising:
a receiver (112) configured to receive a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and
a controller (120) configured to determine whether to release the CPC configuration based on the determination information.

2. The communication apparatus according to claim 1, wherein
the determination information includes an indicator indicating whether to release the CPC configuration after changing the PS cell, and
the controller releases the CPC configuration when the indicator indicates release of the CPC configuration.

3. The communication apparatus according to claim 1 or 2, wherein
the determination information includes an indicator indicating whether to release the CPC configuration after changing the PS cell, and
the controller stores the CPC configuration without releasing the CPC configuration when the indicator indicates the storing of the CPC configuration.

4. The communication apparatus according to claim 2, wherein
the determination information includes first information configured by the indicator and second information different from the indicator, and
when determining to release the CPC configuration based on the second information, the controller releases the CPC configuration even if the indicator indicates the storing of the CPC configuration.

5. The communication apparatus according to claim 1 or 2, wherein
the determination information includes count information indicating the number of times the communication apparatus stores the CPC configuration, and
the controller stores the CPC configuration until the number of changes of the PS cell becomes equal to or larger than the number of times based on the count information.

6. The communication apparatus according to claim 5, wherein
the controller releases the CPC configuration when the number of changes of the PS cell becomes equal to or larger than the number of times based on the count information.

7. The communication apparatus according to claim 5, wherein
the controller releases the CPC configuration when the PS cell is changed after the number of changes of the PS cell becomes equal to or larger than the number of times based on the count information.

8. The communication apparatus according to claim 5, wherein
the controller releases the CPC configuration regardless of the number of changes of the PS cell when a designated timer expires, and
the RRC message includes information indicating a setting value of the designated timer.

9. The communication apparatus according to claim 5, wherein
the determination information includes first information configured by the count information and second information different from the count information, and
when determining to release the CPC configuration based on the second information, the controller releases the CPC configuration even if the storing of the CPC configuration is indicated based on the count information.

10. The communication apparatus according to claim 1 or 2, wherein
the determination information includes timer information indicating the duration during which the communication apparatus stores the CPC configuration, and
the controller stores the CPC configuration until the retention timer set based on the timer information expires.

11. The communication apparatus according to claim 10, wherein
the controller releases the CPC configuration when a retention timer set based on the timer information expires.

12. The communication apparatus according to claim 10, wherein
the controller releases the CPC configuration when the PS cell is changed after a retention timer set based on the timer information expires.

13. The communication apparatus according to claim 10, wherein
the determination information includes first information configured by the timer information and second information different from the timer information, and
when determining to release the CPC configuration based on the second information, the controller releases the CPC configuration even if the timer information indicates the storing of the CPC configuration.

14. The communication apparatus according to claim 1, wherein
the determination information includes event information indicating a condition for releasing the CPC configuration, and
the controller stores the CPC configuration until the condition is fulfilled.

15. The communication apparatus according to claim 1, wherein
the determination information includes event information indicating a condition for releasing the CPC configuration, and
the controller releases the CPC configuration when the condition is fulfilled.

16. The communication apparatus according to claim 15, wherein
the controller releases the CPC configuration when the PS cell is changed after the condition is fulfilled.

17. The communication apparatus according to claim 14, wherein
the determination information includes first information configured by the event information and second information different from the count information, and
when determining to release the CPC configuration based on the second information, the controller releases the CPC configuration even if the storing of the CPC configuration is indicated based on the event information.

18. The communication apparatus according to claim 1, wherein
the controller determines whether to release all the CPC configurations configured in the communication apparatus based on the determination information.

19. The communication apparatus according to claim 1, wherein
the controller determines whether to release the CPC configuration for the SCG associated with the determination information in the RRC message among the SCGs configured in the communication apparatus based on the determination information.

20. The communication apparatus according to claim 1, wherein
the controller determines whether to release the CPC configuration associated with the determination information in the RRC message among the CPC configurations configured in the communication apparatus based on the determination information.

21. The communication apparatus according to claim 1, wherein
the RRC message includes a list of SCG configurations for configuring a plurality of SCG candidates including the PS cell candidate.

22. A base station (200M) configured to operate as a master node in a first network including a master node associated with a master cell group (MCG) configured for a communication apparatus (100) and a secondary node associated with a secondary cell group (SCG) configured for the communication apparatus, the base station comprising:
a transmitter (211) configured to transmit, to the communication apparatus, a radio resource control (RRC) message including a conditional PS cell change (CPC) configuration, which is a configuration to change a primary secondary cell (PS cell) that is a primary cell of the secondary cell group when an execution condition is fulfilled, and determination information for the communication apparatus to determine whether to release the CPC configuration.

23. A communication method executed at a communication apparatus (100) configured to communicate with a master cell group associated with a master node and a secondary cell group associated with a secondary node, the communication method comprising the steps of:
receiving a radio resource control (RRC) message including a conditional PS cell change (CPC) configuration, which is a configuration to change a primary secondary cell (PS cell) that is a primary cell of the secondary cell group when an execution condition is fulfilled, and determination information for the communications apparatus to determine whether to release the CPC configuration; and
determining whether to release the CPC configuration based on the determination information.

24. A communication method executed at a base station (200M) configured to operate as a master node in a first network including a master node associated with a master cell group (MCG) configured for a communication apparatus (100) and a secondary node associated with a secondary cell group (SCG) configured for the communication apparatus, the communication method comprising:
a step of transmitting, to the communication apparatus, a radio resource control (RRC) message including a conditional PS cell change (CPC) configuration, which is a configuration to change a primary secondary cell (PS cell) that is a primary cell of the secondary cell group when an execution condition is fulfilled, and determination information for the communication apparatus to determine whether to release the CPC configuration.
